# EUROPEAN PATENT APPLICATION

(11) **EP 4 760 246 A1**
(43) Date of publication of application: **17.06.2026**
(21) Application number: 25207165.9
(22) Date of filing: 07.10.2025
(51) Int. Cl.: G01N 23/20008, G01N 23/201

(54) **CONTROL APPARATUS, KRATZKY BLOCK, CONTROL METHOD AND CONTROL PROGRAM**

(30) Priority: 11.12.2024 JP 2024216408
(71) Applicant: Rigaku Corporation, Akishima-shi Tokyo 196-8666 (JP)
(72) Inventor: SATO, Takashi, Tokyo 196-8666 (JP); MATSUMOTO, Takashi, Tokyo 196-8666 (JP); HASEGAWA, Tomokazu, Tokyo 196-8666 (JP)
(74) Representative: Maiwald GmbH

(57) **Abstract**

A control apparatus, a Kratky block, a control method and a control program capable of suppressing parasitic scattering and GISAXS scattering caused by the Kratky block are provided. A control apparatus for controlling an X-ray analysis apparatus for a laboratory and acquiring an X-ray scattering image of a molecule with the size of the 1000 Å order comprises an arrangement condition setting section for setting an arrangement condition including an opening degree and a height of a Kratky block 120, an arrangement controlling section for controlling the Kratky block 120 so as to satisfy the arrangement condition, a data acquiring section for acquiring detected X-ray intensity data in each controlled arrangement and an arrangement condition determining section for determining an arrangement condition inducing the smallest effect of scattering by the Kratky block based on the acquired X-ray intensity data.

## Description

### Field of the Invention

The present invention relates to a control apparatus for controlling an X-ray analysis apparatus, a Kratky block, a control method and a control program.

### Description of Related Art

The X-ray scattering method is a method in which X-rays are incident on a sample and scattered X-rays are detected by a detector. In this method, unlike imaging or the like, the measurement data in the reciprocal-lattice space is obtained in the real space with measurement by the detector. In recent years, it has become possible to specify and observe the electron density of a biomacromolecule in a solution from an X-ray scattering profile (see Patent Document 1).

When measuring a biological sample composed of macromolecules, it is necessary to measure up to a range in which the scattering angle is small (low angle side), and for this purpose, it is important to measure the scattering to the vicinity of the X-ray direct beam. By using a parallel beam of synchrotron radiation for the X-ray direct beam and setting a large camera length, it is possible to measure the scattering on the low-angle side (see Non-Patent Document 1). However, it is not realistic to utilize a synchrotron radiation facility in, for example, a process of inspecting a biological sample. In addition, the biological sample needs to be measured on both the low angle side and the high angle side, in which the high angle side is a high angle to some extent, but when the camera length is large, the measurement can be made only on the low angle side.

A method is also conceivable in which a tube capable of decompressing the beam path from the sample to the detector is used to prevent attenuation of the beam and compensate for the low intensity of the beam. However, since the inside of the tube is not a perfect vacuum even with such a tube as a component, the use of a large apparatus is disadvantageous for sensing due to the attenuation of the beam.

Therefore, conventionally, in order to make the measurement on the low angle side in the laboratory without setting a large camera length, the beam is narrowed down to the vicinity of the center of the direct beam using a Kratky block (see Non-Patent Document 2). In that case, a method is adopted in which the position of the Kratky block is adjusted in a direction perpendicular to the direct beam, and then the opening is adjusted.

On the other hand, when the opening degree of the Kratky block is narrowed down and the two blades approach the center of the direct beam, more intense parasitic scattering occurs in an area close to the center of the direct beam. The suppression of the parasitic scattering of the Kratky block has been developed (see Patent Documents 2 and 3).

### Patent Document

Patent Document 1: JP2023-086675
Patent Document 2: JP2008-542751
Patent Document 3: JP2017-506347

### Non-Patent Document

Non-patent Document 1: Sachiko Toma, "Recent Topic of Structural Study of Macromolecular Assembly by Using Bio-SAXS", The Crystallographic Society of Japan, Volume 61, Issue 2 (2019), pp. 79-80
Non-patent Document 2: O. Kratky and H. Stabinger, "X-ray small angle camera with block-collimation system an instrument of colloid research", Colloid & Polymer Sci. (1984), 262: 345-360

As described above, in order to efficiently measure molecules of 1000 Å or more, there is known a method of measuring the low angle side by focusing the beam. However, in the conventional method, even if the incident X-ray is narrowed down to an output of 2%, only molecules of about 800 Å can be measured. A method of further narrowing down the beam and increasing the size of the measurable molecules is also conceivable, but it is not practical because of the reduced scattering intensity. Further, in order to reduce the output to 1%, the stabilities of the beam position, the slit position and the like are required, and it is difficult to control the output.

As the beam is narrowed down, the block surface of the Kratky block becomes parallel to the beam. Then, since the direct beam enters the block surface at a grazing incidence angle, parasitic scattering occurs at substantially the same position as the narrowed beam. The intensity of the parasitic scattering is proportional to the intensity of the incident X-ray. The closer to the center of the beam, the more intense the beam, and the more intense the beam, the more intense the parasitic scattering. When the beam is narrowed down by reducing the opening degree of the Kratky block, the parasitic scattering from the Kratky block becomes large. In addition, when the opening degree of the Kratky block is small, the incident angle of X-rays with respect to the Kratky block becomes small, and GISAXS scattering occurs on the surface of the Kratky block, and intense GISAXS scattering is detected near the center. As described above, in the conventional method of simply increasing the output to narrow the beam, there is a limit to the measurement of the low angle region.

### SUMMARY OF THE INVENTION

It is an object of the present invention to provide a control apparatus, a Kratky block, a control method and a control program that suppress parasitic scattering and GISAXS scattering caused by the Kratky block and enable measurement on low angle regions.

### [Means for Solving the Problems]

(1) To achieve the above purpose, the control apparatus of the present invention is a control apparatus for controlling an X-ray analysis apparatus for a laboratory and acquiring an X-ray scattering image for morphological analysis of a molecule with the size of the 1000 Å order, the control apparatus comprising an arrangement condition setting section for setting an arrangement condition including an opening degree and a height of a Kratky block, an arrangement controlling section for controlling the Kratky block so as to satisfy the arrangement condition, a measurement controlling section for irradiating a measurement object with a direct beam of X-rays narrowed down by the controlled Kratky block, and a data acquiring section for acquiring X-ray data scattered by the measurement object, wherein the arrangement condition setting section sets a center position of an opening of the Kratky block at a position different from a center position of the direct beam.
(2) Further, in the control apparatus according to (1), the arrangement condition setting section sets the center position of the direct beam outside a range of the opening of the Kratky block.
(3) Further, in the control apparatus according to (1) or (2), the data acquiring section acquires X-ray scattering data of biomacromolecules in a solution as the measurement object by using the Kratky block controlled under the arrangement condition.
(4) Further, in the control apparatus according to any one of (1) to (3), the arrangement condition setting section sets the center position of the opening of the Kratky block to a position different from the center position of the direct beam only when the opening degree of the Kratky block is smaller than a predetermined value.
(5) Further, in the control apparatus according to any one of (1) to (4), the Kratky block is controlled under the arrangement condition set in measurement for the same type of measurement object as the measurement object and stored, and the direct beam is irradiated to the measurement object.
(6) Further, the control apparatus according to any one of (1) to (5) further comprises an arrangement condition determining section for determining the arrangement condition having the smallest influence of scattering by the Kratky block and the data acquiring section acquires the detected X-ray intensity data in each of the controlled arrangements, and the arrangement condition determining section determines the arrangement condition based on the acquired X-ray intensity data.
(7) Further, the control apparatus according to the above (6) further comprises a beamstop controlling section for scanning a beamstop and the data acquiring section acquires X-ray intensity data with respect to a scan of the beamstop using the Kratky block placed in each of the controlled arrangements, and the arrangement condition determining section specifies the substantially maximum formal qmin by specifying the position of the beamstop with the shortest distance to the beam center, a target intensity being achieved at the position of the beamstop.
(8) Further, in the control apparatus according to (6), the data acquiring section acquires X-ray scattering data in the controlled arrangement, and the arrangement condition determining section determines the arrangement condition which gives the largest value among values of the formal qmin based on the smallest scattering vector in which statistically significant data given on the X-ray scattering profile generated from the acquired X-ray scattering data exists.
(9) The control apparatus according to any one of (6) to (8), further comprising an I/O controlling section for receiving an input of a target intensity, and the arrangement condition determining section specifies the arrangement condition that induces the input target intensity.
(10) The control apparatus according to any one of (6) to (8), further comprises an intensity setting section for setting a target intensity according to a measurement object, and the arrangement condition determining section specifies the arrangement condition that induces the set targeted intensity
(11) Further, the Kratky block whose arrangement is controlled by the control apparatus according to any one of (1) to (5) has a plate-shaped extra beam blocker provided on the receiving surface opposite to the side for shaping the X-ray direct beam in the subsequent portion.
(12) Further, the control method of the present invention is a control method for controlling an X-ray analysis apparatus for a laboratory and acquiring an X-ray scattering image for morphological analysis of a molecule with the size of the 1000 Å order, the control method comprising setting an arrangement condition including an opening degree and a height of a Kratky block, controlling the Kratky block so as to satisfy the arrangement condition, irradiating a measurement object with a direct beam of X-rays narrowed down by the controlled Kratky block, acquiring X-ray data scattered by the measurement object and setting a center position of an opening of the Kratky block as the arrangement condition at a position different from a center position of the direct beam.
(13) Further, the control program of the present invention is a control program for controlling an X-ray analysis apparatus for a laboratory and acquiring an X-ray scattering image for morphological analysis of a molecule with the size of the 1000 Å order, the control program causing a computer to execute setting an arrangement condition including an opening degree and a height of a Kratky block, controlling the Kratky block so as to satisfy the arrangement condition, irradiating a measurement object with a direct beam of X-rays narrowed down by the controlled Kratky block, acquiring X-ray data scattered by the measurement object and setting a center position of an opening of the Kratky block as the arrangement condition at a position different from a center position of the direct beam.

### Brief Description of the Drawings

FIGS. 1A and 1B are schematic diagrams showing the arrangement of the conventional and inventive Kratky blocks, respectively.
FIG. 2 is a schematic diagram showing a control system according to the present invention.
FIG. 3 is a perspective view showing an X-ray analysis apparatus.
FIG. 4 is a block diagram showing a configuration of a control system according to the present invention.
FIG. 5 is a flowchart showing an operation of the control apparatus according to the first embodiment.
FIG. 6 is a table showing setting conditions.
FIGS. 7A and 7B are graphs showing the detected intensity relative to the position of the beamstop and a table showing the arrangement condition at the desired output %, respectively.
FIGS. 8A and 8B are side views showing the arrangements of the beamstop before and after movement, respectively.
FIG. 9 is a table showing experimental results.
FIG. 10 is a flowchart showing a process from sample measurement to analysis.
FIG. 11 is a schematic diagram showing a process until scattering images are acquired and analyzed.
FIG. 12 is a flowchart showing an operation of the control apparatus according to the second embodiment.
FIGS. 13A, 13B and 13C are a scattering image, a β-direction profile and a q-direction profile, respectively.
FIG. 14 is a schematic diagram showing a configuration of the Kratky block according to the third embodiment.
FIGS. 15A and 15B are cross-sectional and plan views showing a configuration of the Kratky block used in the experiment, respectively.
FIG. 16 is a detection image of a direct beam with the Kratky block at the opening degree of 100%.
FIG. 17 is a detection image of a direct beam at each position of the Kratky block having an opening degree of 29%.
FIGS. 18A and 18B are a graph showing the beam intensity with regard to the position of the Kratky block and a graph showing the relationship between the residual intensity of the inventive approach and the conventional approach with which the same formal qmin is acquired, respectively.
FIG. 19 is a graph showing the intensity distribution for each opening degree and at each position of the Kratky block.
FIG. 20 is a graph showing the position of the beamstop with the shortest distance to the beam center relative to the opening of the Kratky block.
FIG. 21 is a graph showing the position of the beamstop with the shortest distance to the beam center relative to the opening of the Kratky block.
FIGS. 22A and 22B are plan views showing the vertical forward arrangement (VF) and the vertical reversed arrangement (VR) of the Kratky blocks, respectively.
FIGS. 23A and 23B are graphs showing the position of the beamstop with the shortest distance to the beam center relative to the opening of the Kratky block, respectively.

### DETAILED DESCRIPTION OF THE INVENTION

Next, embodiments of the present invention are described with reference to the drawings. To facilitate understanding of the description, the same reference numerals are assigned to the same components in the respective drawings, and duplicate descriptions are omitted.

### [Principle]

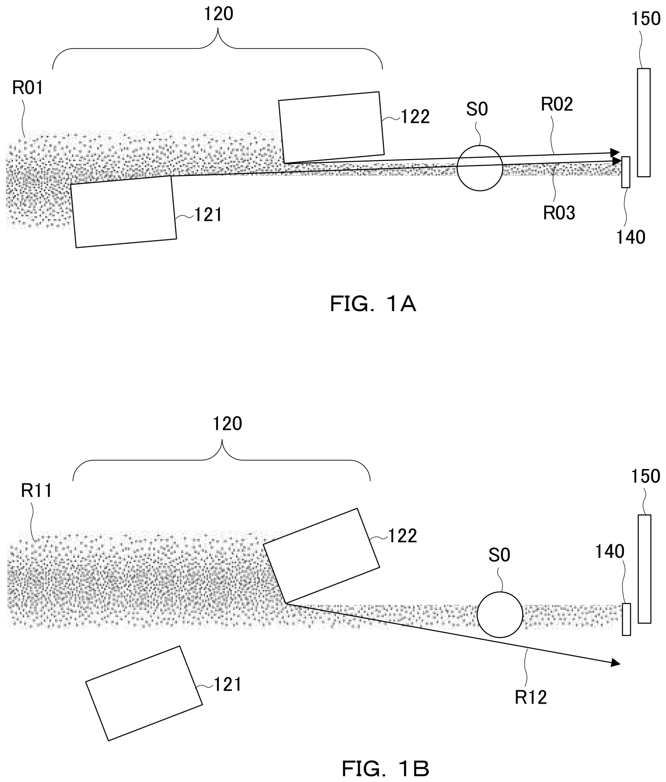

FIGS. 1A and 1B are schematic diagrams showing the arrangement of the conventional and inventive Kratky blocks, respectively. As described above, in the measurement of the biomacromolecule, the narrowing down and the beam intensity are important. Therefore, as shown in FIG. 1A, conventionally, the height and the opening degree of the Kratky block are determined on the assumption that the beam is narrowed down to an area having an equal width around the beam center of the direct beam R01. Specifically, the Kratky block is translationally moved under an OPEN condition to find the center of the beam, and the opening degree of the Kratky block is adjusted and the beam is narrowed down. However, intense parasitic scatterings R02 and R03 are generated by narrowing down the beam to an area close to the center of the beams. The arrows in the figure represent parasitic scattering.

On the other hand, as shown in FIG. 1B, in the present invention, the opening degree is increased to collimate the edge part of the beam, where the intensity is weak. That is, the center position of the opening of the Kratky block is set at a position different from the center position of the direct beam. The center position of the opening of the Kratky block means the center of the aperture width generated between the preceding block 121 and the subsequent block 122, and the center position of the direct beam means the position having the highest X-ray intensity in the direct beam. Specifically, the cross-sectional area perpendicular to the beam traveling direction between the blocks is specified as the aperture width, and the centroid position can be specified as the center position thereof. The center position of the direct beam may be included in the aperture width of the Kratky block but is preferably set outside the range. With such an arrangement, it is possible to prevent the edge of the Kratky block from being irradiated with the X-ray having a high intensity.

Further, by increasing the opening degree to collimate the weak portion of the intensity of the beam edge, but the input is weakened, the intensity of the parasitic scattering is dramatically reduced. Specifically, the Kratky block is translationally moved under an OPEN condition to find the center of the beam, the opening degree is adjusted, and since the preceding and subsequent blocks are not symmetrical, the height (position perpendicular to the rotational axis) is optimized by the translational movement. In this way, even when, for example, a beam having the same 2% intensity is extracted, parasitic scattering can be extremely reduced by increasing the opening degree to use the edge part of the beam rather than narrowing down the beam in the vicinity of the beam center.

Note that the side close to the X-ray source is referred to as a preceding block, and the far side is referred to as a subsequent block (hereinafter, the same applies). Further, one of the directions perpendicular to the traveling direction of the X-ray is referred to as an upper stage, and the other is referred to as a lower stage. The beam is cut linearly by the block on the subsequent side of the Kratky block, and a sharp beam shape having a large intensity is obtained at the cut edge. The part is utilized as a long narrow beam.

Consequently, the formal qmin to be reached is dramatically improved. The formal qmin is a parameter based on the wave number of the smallest scatter vector in which statistically significant data exists in the intensity profile. The formal qmin is defined as 2π/qa when the wave number formally determined by plotting a graph as the wave number of the smallest scattering vector with the standard deviation σ of the statistically significant intensity is expressed as qa. The arrangement condition is optimized by specifying the arrangement condition of the Kratky block which gives the largest value among values of the calculated formal qmin. For example, when the camera length is set to 400mm, the formal qmin reaches about 3000 Å in terms of resolution. This is practically the level at which biomacromolecules of 2000 Å size can be observed.

### [First Embodiment]

### (Control System)

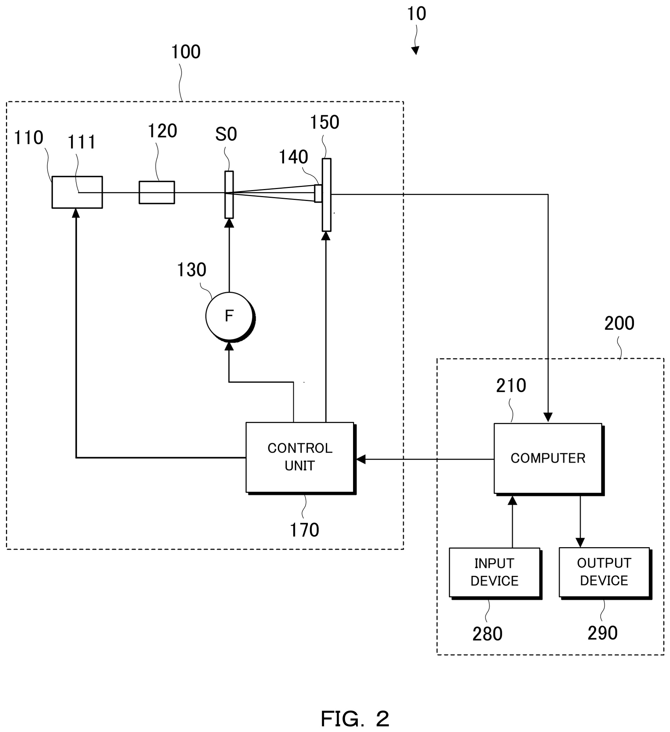

FIG. 2 is a schematic diagram showing a control system 10. The control system 10 comprises an X-ray analysis apparatus 100 and a control apparatus 200. The X-ray analysis apparatus 100 irradiates the sample S0 with X-rays and detects small angle scattered X-rays. The sample S0 to be measured is preferably a macromolecule in solution, particularly a biomacromolecule. In particular, when a pharmaceutical molecule, a molecular complex or structure in a solution is targeted, a resolution of 30 Å or less is required, and the present invention is also effective in such an analysis. The biomacromolecule is basically a natural macromolecule produced by cells of an organism but also includes a virus.

Solutions to be irradiated with X-rays include sample solutions and buffer solutions. The sample solution is a solution containing a sample, and is, for example, a solution containing a biomacromolecule and a special component for maintaining the biomacromolecule. The buffer solution is a solution obtained by removing the sample from the sample solution. For example, the buffer solution of the above example is a solution that does not contain a biomacromolecule but contains a special component. As the buffer solution, a solution consisted of a component similar to the component of the sample solution may be separately prepared, but it is preferable to use a solution obtained by removing the sample from the sample solution.

The X-ray analysis apparatus 100 comprises an X-ray generating section 110, a Kratky block 120, a sample loading mechanism 130, a beamstop 140, a detector 150 and a control unit 170. The X-ray generating section 110 has an X-ray source 111 and irradiates the sample S0 with X-rays. For the target of the X-ray source 111, Cu is preferably used, although Co or Ga may be used. The Kratky block 120 is formed by integrating two blocks, a preceding-stage block 121 and a subsequent-stage block 122. By tilting the Kratky block 120 around the rotation axis, an opening is generated between the blocks arranged in the preceding stage and the subsequent stage of the beam, respectively. The beam is narrowed down by passing X-rays between the blocks.

The sample loading mechanism 130 delivers the sample solution containing the sample S0 or the buffer solution without the sample to the X-ray irradiation position with the sample holding tube. The beamstop 140 is used to shield the direct beam. The detector 150 detects the direct beam or X-rays scattered by the sample SO and transmits the measured data to the computer 210.

In the above-described configuration, one detector 150 is provided for one X-ray beam emitted from the X-ray source 111, but other configurations may be adopted. For example, the X-ray analysis apparatus 100 may be configured to irradiate two equivalent beams in the same direction using a mirror or a slit and detect the scattered rays by one detector. In addition, the X-ray analysis apparatus 100 may be configured to irradiate two equivalent beams in opposite directions and detect the scattered rays by two detectors.

The control apparatus 200 comprises a computer 210, an input device 280, and an output device 290 and controls the operation of the X-ray analysis apparatus 100 and acquires and processes measurement data from the X-ray analysis apparatus 100. Note that the control of the measurement apparatus and the processing of the measurement data may be performed by separate computers.

The computer 210 is, for example, a PC, and comprises a processor that executes processes, a memory that stores programs and data, a hard disk and the like. The computer 210 receives user input from an input device 280 such as a keyboard or a mouse.

The computer 210 may be a server device placed on a cloud. In addition, from the viewpoint of processing load, the function for controlling the operation of the X-ray analysis apparatus 100 and the function for processing the measured data may be separated, and the control may be executed by a PC placed at the site, and the data processing may be executed by the server device.

### (X-ray Analysis Apparatus)

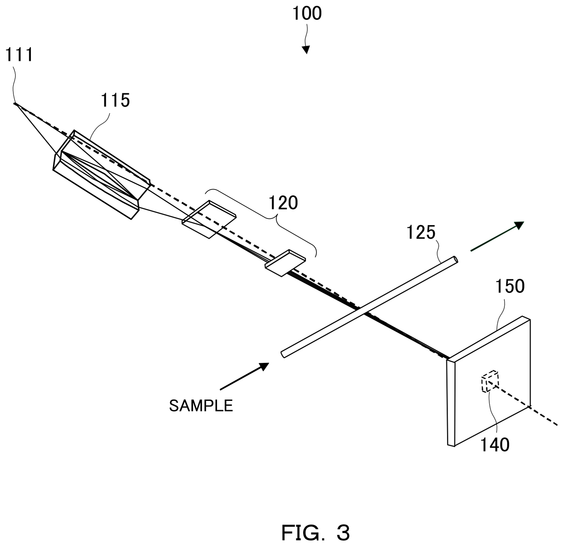

FIG. 3 is a perspective view showing an X-ray analysis apparatus 100. The X-ray analysis apparatus 100 is a laboratory measurement apparatus for irradiating a sample S0 with X-rays, detecting scattered X-rays and acquiring measurement data and can acquire the X-ray scattering image for a molecule with the size of the 1000 Å order. The 1000 Å order means, for example, a size of 1000 Å or more. The X-ray analysis apparatus 100 comprises an X-ray source 111, an optical system 115, a Kratky block 120, a sample holding tube 125, a beamstop 140 and a detector 150. The X-ray source 111 is a line radiation source or a point radiation source and emits a divergent beam. The optical system 115 is, for example, a KB parallel-type or series-type optical system.

The Kratky block 120 interacts with the X-rays by the respective edges to define one side and the other side of the X-ray beam. Thus, parasitic scattering can be removed from the irradiated X-rays but also causes some scattering by the Kratky block 120 itself. The sample holding tube 125 delivers and holds 5µl to 10µl of the solution.

The beamstop 140 stops the direct beam. The detector 150 detects the direct beam or the X-rays scattered by the solution. The X-ray analysis apparatus 100 transmits the detected scattering image to the control apparatus 200. The scattering image detected at every predetermined time t is transmitted as measurement data.

### (Control Apparatus)

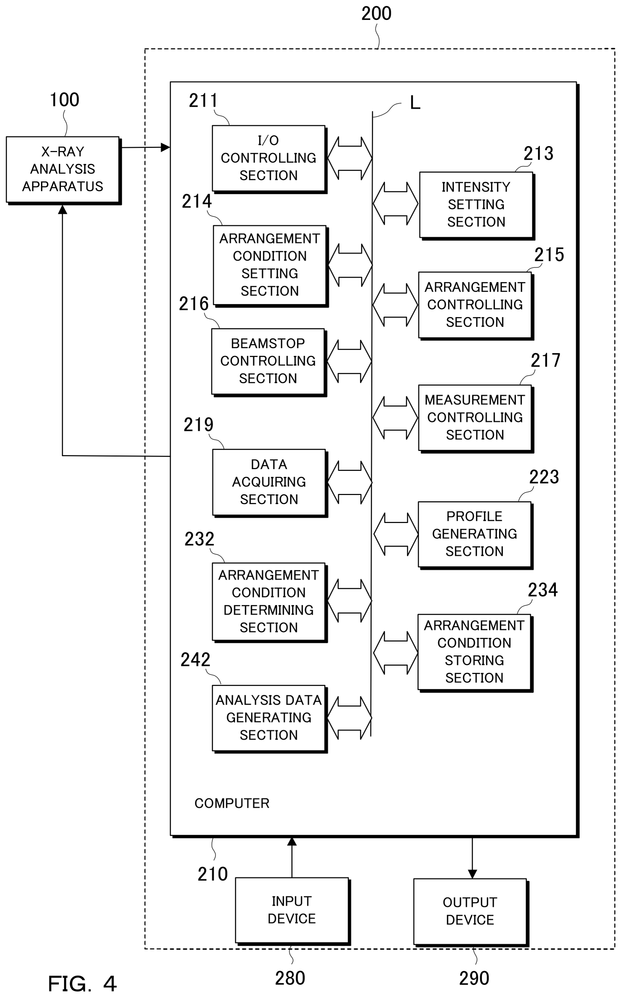

FIG. 4 is a block diagram showing the control system 10. The control apparatus 200 controls the X-ray analysis apparatus 100 to adjust the Kratky block 120 prior to sample measurement. The control apparatus 200 can also control the X-ray analysis apparatus 100 at the time of sample measurement to acquire and turn X-ray scattering data into profile and perform analysis. The functions of the control apparatus 200 are mainly realized by the computer 210.

The computer 210 comprises an I/O controlling section 211, an intensity setting section 213, an arrangement condition setting section 214, an arrangement controlling section 215, a beamstop controlling section 216, a measurement controlling section 217, a data acquiring section 219, a profile generating section 223, an arrangement condition determining section 232, an arrangement condition storing section 234 and an analysis data generating section 242. Each section can transmit and receive information via the control bus L.

The I/O controlling section 211 receives an input from the input device 280 and controls an output to the output device 290. For example, the I/O controlling section 211 can receive an input of a targeted intensity (output %) from a user. The targeted intensity is almost determined by the type of the sample but can be precisely set by the user's input. The user can set an appropriate output % and optimize the arrangement of the Kratky block according to the setting.

An input of whether or not to use the stored arrangement condition of the Kratky block 120 can also be accepted for the type of the measurement object. When the input that the stored arrangement condition is used is accepted, the measurement is performed under the stored arrangement condition of the Kratky block 120. This makes it possible to omit the adjustment of the Kratky block with respect to the same type of measurement object. The I/O controlling section 211 can also output indices and determination results.

The intensity setting section 213 sets the targeted intensity according to the measurement object. An appropriate output % can be automatically set according to the measurement object, and the arrangement condition of the Kratky block can be optimized according to the setting. For example, an appropriate intensity can be set for either protein formulations, antibody drugs, or gene therapy vectors.

The arrangement condition setting section 214 sets an arrangement condition including an opening degree and a height of the Kratky block 120. The arrangement controlling section 215 controls the Kratky block so as to satisfy the arrangement condition. For example, it is possible to generate a preliminary table of a scanning range in which the targeted intensity can be achieved at each opening degree and to set each arrangement condition.

The beamstop controlling section 216 performs scanning with the beamstop. For example, a constant pitch step of the beamstop 140 is determined, and the beamstop 140 is moved accordingly to allow measurement at each position. The control instructions are transmitted to a control unit 170 in the X-ray analysis apparatus 100, whereby the beamstop 140 is controlled.

The measurement controlling section 217 controls the operation of the X-ray analysis apparatus 100. The operations to be controlled include sample delivery, X-ray generation and movement of sample position and detector. The measurement controlling section 217 transmits these control instructions to the control unit 170 in the X-ray analysis apparatus 100, and thereby each section of the X-ray analysis apparatus 100 is controlled. Then, the measurement controlling section 217 can irradiate the measurement object with the direct beam of the narrowed X-ray by controlling the Kratky block 120.

The data acquiring section 219 acquires X-ray intensity data detected by the X-ray analysis apparatus 100 in each arrangement of the controlled Kratky block 120. As a result, the data acquiring section 219 acquires X-ray scattering data obtained by measuring the measurement object under the determined arrangement condition of the Kratky block. At the time, the opening degree of the Kratky block is increased, the center side of the X-ray direct beam is cut by the subsequent block, and the edge of the beam that has passed is irradiated. By increasing the opening degree of the Kratky block, it is possible to reduce the X-ray amount irradiated to the preceding block and reduce the scattering intensity. In addition, it is possible to prevent the GISAXS scattering since the incident angle of the beams is increased. On the other hand, a sharp beam of sufficient intensity can be obtained at the edge of the cut beam. Since the scattered X-rays generated from the subsequent block are dissipated outside the measurement region, the measurement result is less likely to be affected.

The data acquiring section 219 similarly acquires the X-ray data detected at the beam positions respectively positioned in not only the sample measurement but also the adjustment before the sample measurement. The acquired measurement data is used to determine the arrangement condition of the Kratky block 120, convert the measurement data into a scattering profile, optimize the measurement condition, generate analysis data and the like. The data acquiring section 219 acquires the X-ray intensity with respect to the scanning of the beamstop using the Kratky block placed in each controlled arrangement.

The data acquiring section 219 acquires X-ray scattering data of the biomacromolecule as a result of measurement of the biomacromolecule in the solution under the arrangement condition determined at the time of measurement. In this way, viruses and antibodies of 2000 Å or more can be measured.

The profile generating section 223 generates an intensity profile based on the acquired X-ray scattering data. In turning into profile, upsampling with a width smaller than the pixel size or downsampling opposite thereto may be used. Specifically, the measurement data is converted into the scattering profile by the following method. That is, the intensity is integrated along the circumferential direction (β direction) around the center of the scattering image, and the scattering profile is calculated. The profile generating section 223 also calculates the standard deviation of the intensity in the β direction with respect to the given wave number q.

Based on the acquired X-ray intensity data, the arrangement condition determining section 232 determines an arrangement condition having the smallest effect of scattering by the Kratky block 120. By optimizing the arrangement condition, the Kratky block can be used with a large degree of the opening avoiding the center of the beam.

Specifically, the position of the beamstop with the shortest distance to the beam center that induces the targeted intensity is specified to specify the substantially maximum formal qmin. Thus, the scanning of the beamstop can be used instead of specifying the largest formal qmin.

In any case, the arrangement condition of the Kratky block 120 is determined so as to achieve the targeted intensity input or automatically set. The arrangement condition determining section 232 may determine the arrangement condition of the Kratky block for the same type of measurement object based on the stored arrangement condition.

The arrangement condition storing section 234 stores the determined arrangement condition of the Kratky block 120 in accordance with the type of the measurement object. The arrangement condition determined in this way can be stored, and the measurement can be performed therewith. For example, the arrangement condition leading to the maximum obtainable resolution obtained on that day can be stored and the sample measurement can be started immediately using the stored settings on the next day. Thus, the adjustment of the Kratky block can be omitted with respect to the same type of measurement object.

The analysis data generating section 242 subtracts the profile of the buffer solution scaled as the background from the profile of the sample solution. The profile of the sample solution subtracted the background is output as the analysis data. Details of the profile are described later.

### (Control Method)

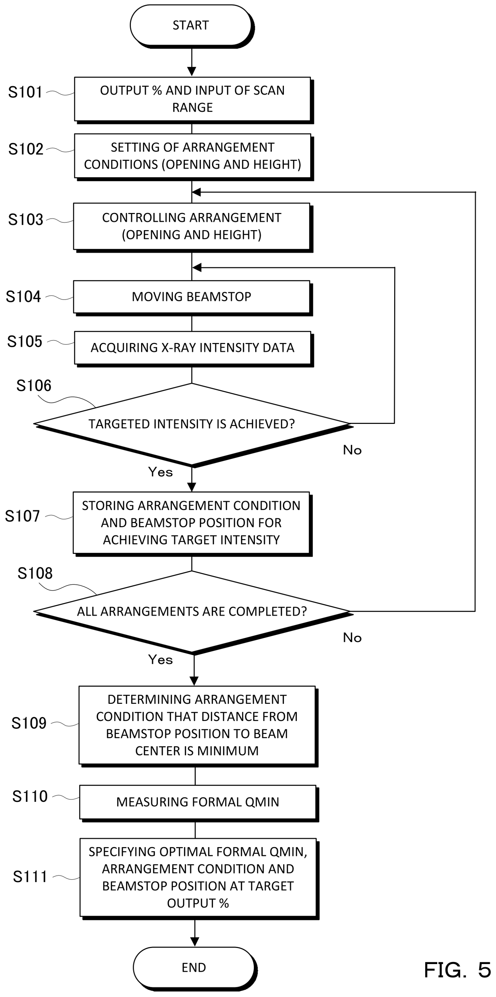

Next, a method performed by the control apparatus 200 configured as described above is described. FIG. 5 is a flowchart showing an operation of the control apparatus 200. Originally, in order to search for a setting condition for achieving an optimum formal qmin, an X-ray scattering profile needs to be generated using a reference sample, and a formal qmin for each setting condition needs to be obtained. However, such a method takes too much time and effort. Therefore, in the present embodiment, the optimization of the formal qmin is substituted by the scanning of the beamstop. A specific procedure is described below.

First, according to the measurement object, the necessary output % of the incident X-ray (targeted intensity) and the scanning range of the Kratky block are set (step S101). The scanning range of the Kratky block refers to a range that is varied with respect to the opening degree and the position thereof. Any of them may be automatically determined according to the type of the measurement object selected by the user. Next, the arrangement condition of the Kratky block is set (step S102). Specifically, the opening degree and the position of the Kratky block with respect to each X-ray irradiation are set. Then, the Kratky block is controlled so as to be arranged at one of the set arrangement conditions (opening degree and position (height)) (step S103). At the time, the standard sample shall not be installed.

Scanning of the beamstop is started, and the beamstop is moved by the pitch step (step S104). After the movement, X-rays are irradiated under the arrangement condition of the Kratky block, and the X-ray intensity data detected by the detector is acquired (step S105). Then, it is determined whether or not the targeted intensity is achieved (step S106). If the targeted intensity has not been achieved, the process returns to step S104, and the scanning of the beamstop is continued. When the targeted intensity is achieved, the arrangement condition of the Kratky block and the position of the beamstop at that time are stored (step S107). Details of the scanning of the beamstop are described later.

Next, it is determined whether or not all the arrangements of the Kratky blocks have been completed (step S108), and if not, the process returns to step S103 to control the Kratky blocks to the subsequent arrangement. When all the arrangements are completed, the arrangement condition when the beamstop is at the position with the shortest distance to the beam center is determined as the optimum arrangement condition (step S109).

The reference sample is arranged using the arrangement condition of the Kratky block determined in this way, and the formal qmin is measured by varying other setting conditions (step S110). Then, the optimum formal qmin, the arrangement condition and the beam-stop position in the targeted output % are specified (step S111) and the series of processes is ended.

By specifying the optimum setting of the optical system and the beam position in this way, the obtainable resolution can be optimized, and for example, when the present invention is applied to a MAXS (Middle Angle X-ray Scattering), a resolution of up to 3000 Å can be obtained. Since the scattering image is based on a Fourier transform of real space and is obtained as a scattering image in an integral range having a margin for an observable size by a Fourier transform, the size of a molecule that can be actually analyzed is smaller than the obtainable resolution. However, even in this case, the state of biomacromolecules such as lentivirus, coronavirus and adenovirus of about 1000 Å in size can be distinguished.

### (Setting of Output%)

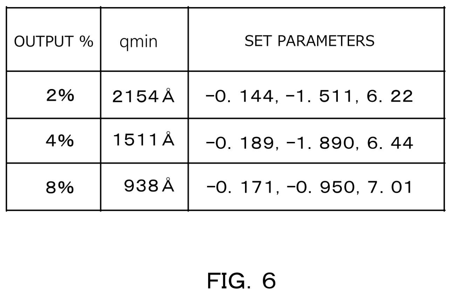

FIG. 6 is a table showing setting conditions. In the step of setting the output % (targeted intensity) necessary for the incident X-ray according to the measurement object, it is preferable to receive an input for selecting the type of the sample to be measured from the user. Depending on the selection, the appropriate settings for the output %, formal qmin and other parameters can be selected from a previously prepared table. The selected settings are then refined and used in the measurement and analysis of the measurement results.

### (Setting of Arrangement Condition for Kratky Block)

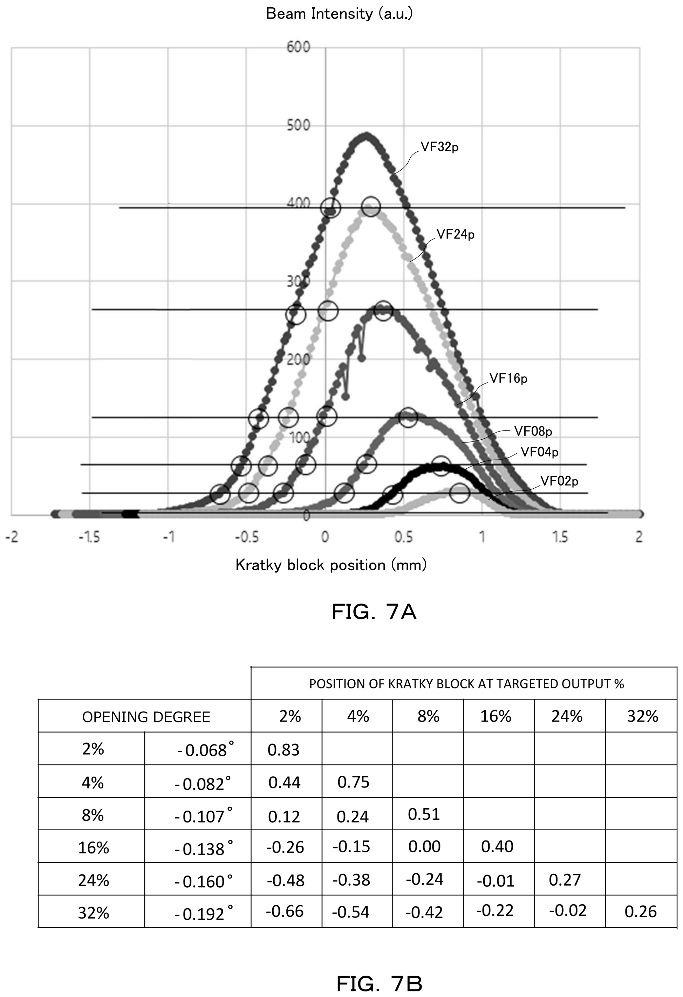

FIGS. 7A and 7B are graphs showing the detected intensity relative to the position of the beamstop and tables showing the arrangement condition at the desired output %, respectively. The opening degree of the Kratky block is basically expressed as the inclination of the Kratky block with respect to the traveling direction of the X-ray beam. On the other hand, it can also be expressed as a percentage of the intensity of the emitted X-rays with respect to the intensity of the incident X-rays when the Kratky block is placed at the beam center. As shown in FIG. 7B, as the opening degree, an inclination of -0.068° corresponds to an output of 2%, and an inclination of -0.073 corresponds to an output of 3%. Therefore, the opening degree of -0.068° can also be expressed as an opening degree of 2%.

According to the above definition of the opening degree, the output of 2% can be achieved only in the case where the center position of the Kratky block and the position of the beam center coincide with each other with the Kratky block having the opening degree of 2%, that is, with the arrangement at one position of the beam center. However, an opening degree greater than 2% can be achieved with the arrangement at a position offset from the beam center. For example, when the Kratky block with an opening degree of 4% is moved in a direction perpendicular to its rotational axis, a power of 2% can be achieved around the position of 0.4 on the graph shown in FIG. 7A. In the drawing, "VF32P" indicates that a Kratky block having an opening degree of 32% in the vertical forward arrangement has been moved. The same applies to other indications.

Therefore, the table indicating the arrangement condition in the targeted output % can be prepared as follows. First, the Kratky block is controlled to be with a constant opening degree, and the position of the Kratky block is changed while maintaining the opening degree, and the intensity (output %) of the direct beam passing through the Kratky block is measured. Then, this measurement is performed by the Kratky block controlled to each opening degree. In this way, there are two positions at which the predetermined output % can be achieved at the respective opening degrees, and one of the positions can be recorded as a usable position, and a table showing the arrangement condition at the targeted output % as shown in FIG. 7B can be generated.

### (Scanning of Beamstop)

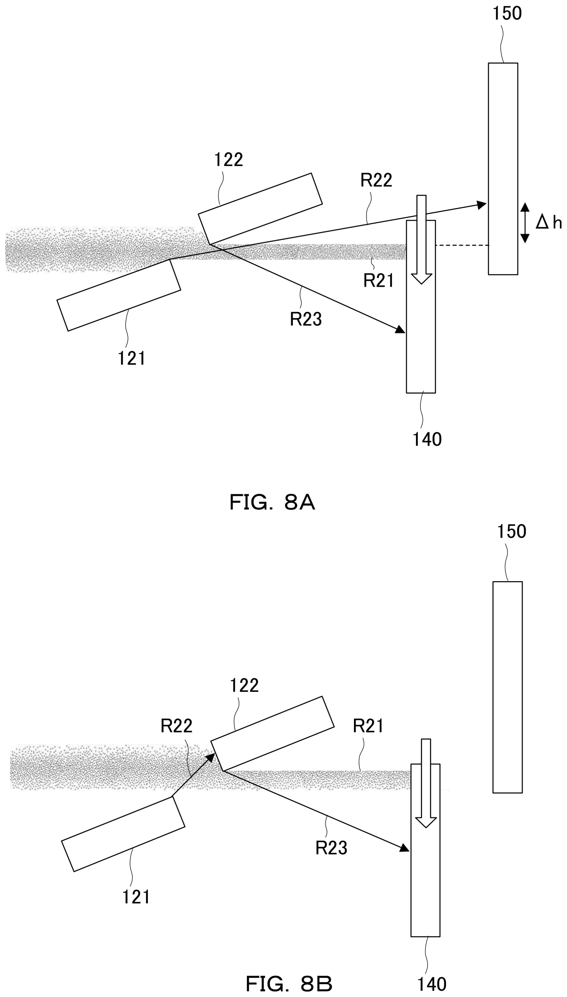

Of the above steps, the scanning of the beamstop is described below. FIGS. 8A and 8B are side views showing the arrangement of the beamstop 140 when parasitic scattering is detected and not detected, respectively. In the embodiment shown in FIG. 8A, the opening degree of the Kratky block is small, and the center position of the opening of the Kratky block coincides with the center position of the direct beam. In this situation, not only the shaped direct beam R21 but also the parasitic scatterings R22 and R23 are generated in a position far from the beam center. R22 represents the parasitic scattering originating from the preceding block 121, and R23 represents the parasitic scattering originating from the subsequent block 122. Here, R22 is detected by the detector 150, but R23 can be prevented by the beamstop 140. In FIG. 8A, as the beamstop 140 is moved by small pitches in the direction of the arrows, the intensity detected by the detector 150 at the location where the end of the beamstop 140 shields the shaped parasitic scattered R22 increases rapidly.

On the other hand, in the embodiment shown in FIG. 8B, the opening degree of the Kratky block is large, and the center position of the opening of the Kratky block and the center position of the direct beam are different from each other. In this case, the direct beam R21 and parasitic scattering R22 and R23 occur, but only the direct beam 21 is detected. This is because the incident angle of the direct beam R21 with respect to the preceding block 121 is large, and the parasitic scattering R22 is generated at a position away from the direct beam R21. Thus, moving the beamstop 140 little by little in the direction of the arrow causes the intensity detected by the detector 150 to rise sharply prior to the edge of the beamstop 140 shielding the edge of the shaped direct beam R21. The position of the beamstop just before the sharp increase in intensity corresponds to the condition that the formal qmin is obtained. By comparing the embodiments shown in FIGS. 8A and 8B, the position of the beamstop is able to be moved to a position closer to the beam center by Δh in FIG. 8B. In this way, the parasitic scattering is smallest when the position at which the formal qmin is obtained is closest to the beam center, the condition is a condition that the largest formal qmin is obtained.

### (Recording of Measurement Results)

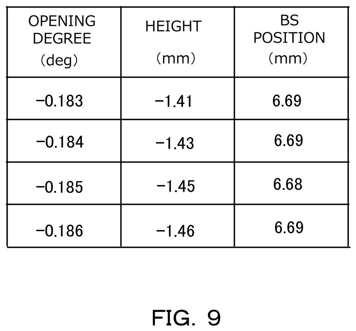

FIG. 9 is a table showing experimental results. FIG. 9 shows the arrangement conditions (opening degree and height) of the Kratky block causing the same intensity and the position (BS position) of the beamstop at that time. In FIG. 9, the BS position is lowest under the condition with the opening degree of -0.185° and the height-1.45mm. The obtainable resolution (=formal qmin) and other setting parameters in the state at the lowest BS are stored. By the above-described control method, the optimum arrangement condition of the Kratky block 120 is specified. Prior to sample measurement, the Kratky block 120 is adjusted to the arrangement condition.

### (Sample Measurement and Analysis Method)

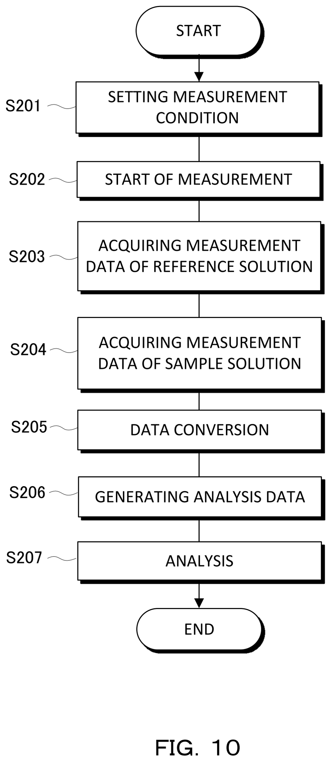

After optimization of the arrangement condition and other parameters as described above, further sample measurement and analysis can be performed using the control system 10. FIG. 10 is a flowchart showing a process from sample measurement to analysis. First, the X-ray analysis apparatus 100 sets the measurement condition based on the information input from the user (step S201).

In response to the instruction to start the measurement by the user input, the X-ray analysis apparatus 100 starts the measurement (step S202). The X-ray analysis apparatus 100 transmits the buffer solution to a predetermined position, irradiates the buffer solution with X-rays and acquires scattering data by the detector (step S203). Next, the scattering data of the sample solution is acquired in the same manner (step S204). The X-ray analysis apparatus transmits the acquired scattering image data as the measurement data to the computer 210.

The computer 210 stores the received measurement data and converts the measurement data into the scattering profile (step S205). Then, a difference between the obtained profiles is obtained, analysis data is generated (step S206), and analysis is performed using the data (step S207).

### (Acquisition and analysis of scattering images)

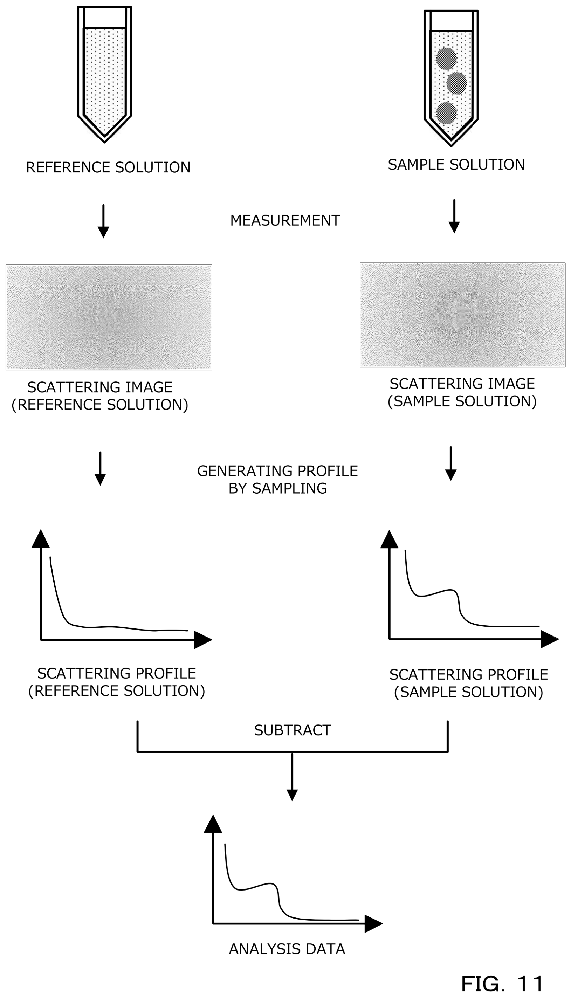

FIG. 11 is a schematic diagram showing a process until scattering images are acquired and analyzed. The buffer solution and the sample solution are alternately irradiated with X-rays, and a scattering image detected at every predetermined time t is acquired. By replacing the sample holding tube 125 using the sample loading mechanism, it is possible to alternately irradiate each of the solutions.

The scattering image is data transformed into a profile. The analysis data is obtained by subtracting the intensity profile obtained by integrating the measurement data of the buffer solution using the intensity profile obtained by integrating the measurement data of the sample solution over the entire measurement time.

In this case, the subtraction after the relative scale adjustment, i.e., scaling between the profile of the sample solution and the profile of the buffer solution must be performed in order to perform appropriate processing on the high-angle-side data used for analysis of the structure of 30 Å or less.

The obtained analysis data can be used for structural analysis as an X-ray scattering profile of actual measurement. The volume of the cube of the real space containing the particles is represented by the cubic voxels discretized into N×N×N grids, and the electron density map can be calculated by searching for the structure factor based on the measured X-ray scattering profile.

Specifically, a plurality of structural models is generated from the measured X-ray scattering profile, and a calculated X-ray scattering profile is derived from each of the plurality of structural models. An index representing the degree of coincidence between the calculated X-ray scattering profile and the measured X-ray scattering profile is calculated, and a representative structural model is selected from a plurality of structural models based on the calculated index. The plurality of structural models may be used as an ensemble to evaluate the shape and mobility of the molecule. In this way, the electron density of the macromolecule in the solution having the dynamic fluctuation can be reproduced, and various information can be obtained.

### [Second Embodiment]

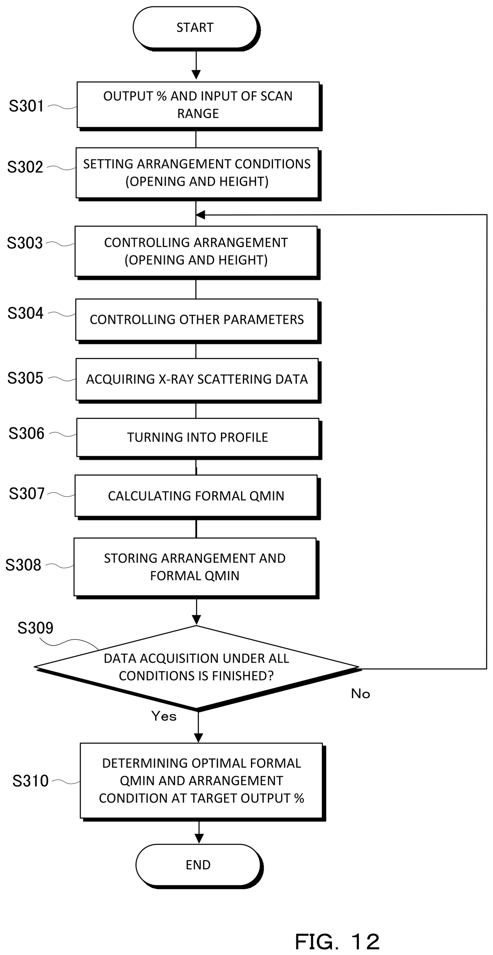

In the above-described embodiment, the beamstop is scanned instead of the optimization of the formal qmin, but the formal qmin may be optimized in principle. That is, in the first embodiment, the optical system having the largest formal qmin is searched by scanning the beamstop, but in the second embodiment, the optical system having the largest formal qmin is searched by using scattered rays from the sample without using the beamstop. FIG. 12 is a flowchart showing an operation of the control apparatus 200.

First, according to the measurement object, an output % necessary for the incident X-ray (targeted intensity) and a scan range of the Kratky block are set (step S301). Then, arrangement conditions of the Kratky block are set (step S302), and the Kratky block is controlled so as to be arranged at one of the set arrangement conditions (opening degree, position (height)) (step S303). A reference material is placed instead of the sample. For example, AgBh can be used as the reference material.

Next, other parameters are controlled (step S304). Other parameters include, for example, the position of the direct beam relative to the detector 150. The reference sample is irradiated with X-rays, and the detected X-ray scattering data is acquired (step S305). The acquired X-ray scattering data is performed data conversion, i.e. turning into profile (step S306). The data conversion is described in detail below.

The formal qmin is calculated using the X-ray scattering profile of the reference sample obtained by the data conversion (step S307). The formal qmin is a numerical value defined by the wave number of the smallest measurable scattering vector. Here, measurable means that statistically significant intensity information is obtained. For example, the wave number at which the standard deviation σ of the intensity is less than or equal to 5% of the intensity may be defined as the wave number of the smallest measurable scattering vector. The threshold value of the standard deviation σ is not limited to 5% and may be any other predetermined value. By the above-described calculation, the obtained formal qmin and the arrangement condition of the Kratky block are stored (step S308).

It is determined whether or not data acquisition has been completed under all the setting conditions (step S309). When the data acquisition has not been completed under all the setting conditions, the process returns to step S303 to perform new arrangement of the Kratky block. When the data acquisition has been completed under all the setting conditions, the optimum formal qmin and the arrangement condition in the targeted output % are determined (step S310), and the series of processes is ended. In this way, it is possible to determine the arrangement condition of the Kratky block having the highest resolution with respect to the measurement object. It is also possible to observe molecules with the size of the 1000 Å order by the improved resolution.

### (Data Conversion)

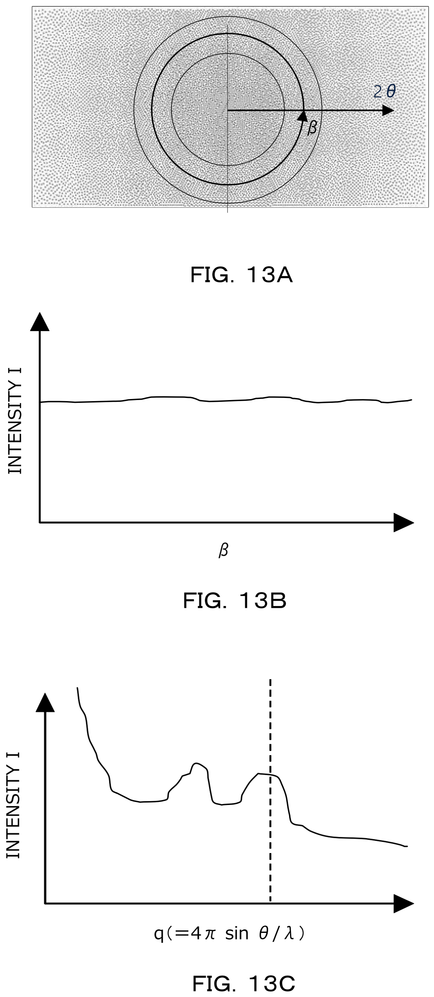

FIGS. 13A, 13B and 13C are a scattering image, a β-direction profile and a q-direction profile, respectively. When X-rays are irradiated to a solution, a scattering image as shown in FIG. 13A is acquired. When the intensity I is plotted in the circumferential direction (β direction) around the center with a predetermined scattering vector q in the scattering image, a graph as shown in FIG. 13B is obtained. Further, when the intensity I is integrated in the β direction of the scattering image and the integrated intensity I is represented for the respective scattered vectors q, an X-ray scattering profile as shown in FIG. 13C is obtained.

### [Third Embodiment]

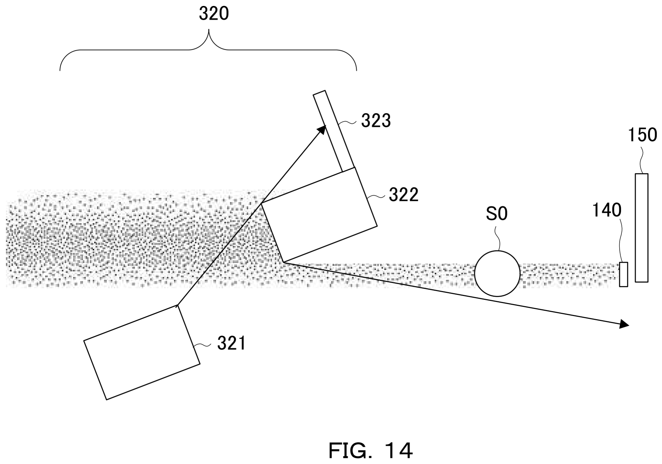

In the above-described embodiment, a conventional Kratky block is used as the Kratky block, but a Kratky block with an extra beam blocker may be used. FIG. 14 is a schematic diagram showing a configuration of the Kratky block 320.

The Kratky block 320 comprises a preceding block 321 and a subsequent block 322. The subsequent block 322 comprises an extra beam blocker 323 on a surface opposite to the shaping side for the beam and on an end portion of the subsequent side. The extra beam blocker 323 is formed in a rectangular flat plate shape to prevent parasitic scattering generated at the edge of the preceding block 321 from reaching the detector 150 side. It should be noted that the extra beam blocker 323 only needs to be capable of removing scattered rays, and the shape is not limited to a rectangular flat plate shape. In this way, it is possible to prevent the scattering caused by the receiving surface of the Kratky block 320 from affecting the measurement.

The arrangement of the Kratky block 320 is controlled by the control apparatus 200, and the shaped direct beam enters the sample S0, and scattered X-rays are detected by the detector 150. The transmitted direct beam is shielded at beamstop 140.

### [Example]

### (Acquisition of Scattering Image)

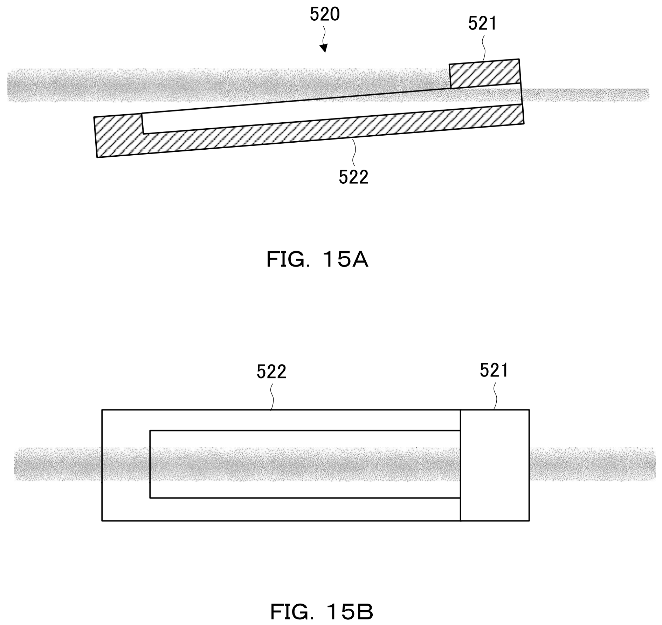

Experiments were conducted to confirm the present invention. FIGS. 15A and 15B are cross-sectional and plan views showing a configuration of the Kratky block 520 used in the experiment, respectively. The Kratky block 520 comprises a preceding upper block 521 and a subsequent lower block 522 as an integrated block. Note that the Kratky block 120 may have a separable blade.

The preceding upper block 521 and the subsequent lower block 522 may be in a horizontal arrangement or a vertical arrangement depending on the direction of the edges of the block used for cutting the beam. In addition, in each arrangement, there are a forward arrangement in which the beam center is shielded by the preceding block and a reversed arrangement in which the beam center is shielded by the subsequent block.

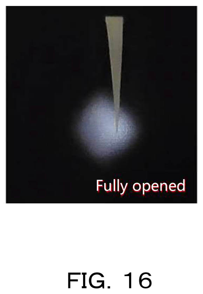

The direct beam was detected in the arrangement of the Kratky block 520 at the opening degree of 100%. FIG. 16 is a detection image of a direct beam with the Kratky block at the opening degree of 100%. A wedge-shaped mark in the drawing indicates the position of the beam center. The projected image of the direct beam is circular, but the beam center is slightly offset from the center of the circle. This is due to the mirror on the incident side and means that the cross-sectional shape of the incident X-ray beam itself has a shape in which a tail is left from the center to one side.

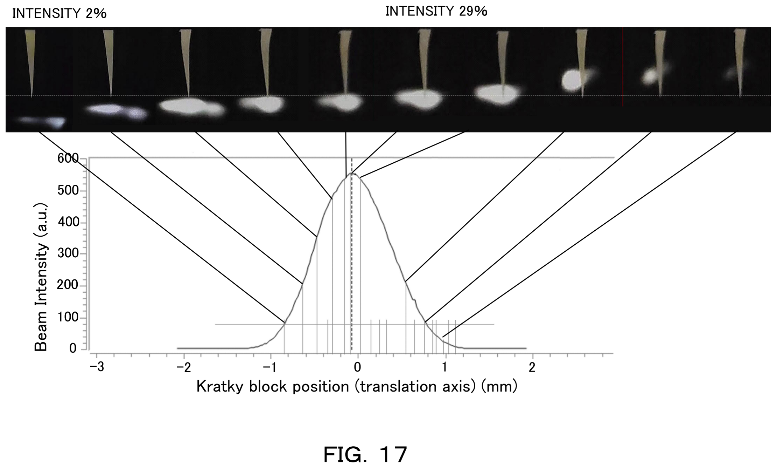

Next, the opening degree of the Kratky block 520 was set to 29%, and the formed direct beam was detected with changing the position. FIG. 17 is a detection image of a direct beam at each position of the Kratky block having an opening degree of 29%. The wedge-shaped mark indicates the beam center of the direct beam incident on the Kratky block by its tip (the position of the broken line). In the arrangement of the Kratky block with the intensity of 29%, the beam center of the direct beam and the opening center of the Kratky block coincide with each other. In this case, scattering by the Kratky block occurs on both sides in the direction perpendicular to the edge of the Kratky block.

When a beam with an intensity of 2% is obtained by moving the Kratky block in a direction to cut the center side of the direct beam by the subsequent block of the Kratky block, a sharp beam with the least scattering is obtained. On the other hand, when moving the Kratky block in a direction to cut the center side of the direct beam by the preceding block of the Kratky block, large scattering occurs, and the beam shape is not sharp. That is, in the present embodiment, it is preferable to arrange the center position of the opening of the Kratky block closer to the preceding block side than the center position of the direct beam.

### (Creating Table of Arrangement Conditions)

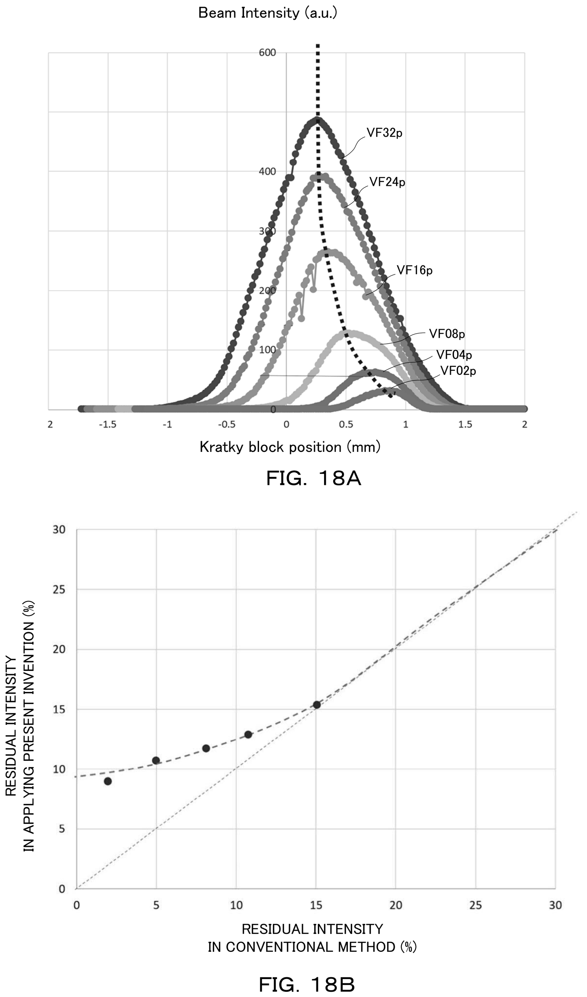

FIG. 18A shows the residual intensity with regard to the position of the Kratky block 520, respectively. In the drawing, "VF32P" indicates that the Kratky block 520 having an opening degree of 32% in the vertical forward arrangement has been moved. The same applies to other indications.

FIG. 18B is a graph showing the residual intensity of the inventive approach and a conventional approach that provides the same formal qmin. The residual intensity obtained by carrying out the present invention is shown on the vertical axis, and the residual intensity in the case where the center of the Kratky block is arranged at the beam center by the conventional method is shown on the horizontal axis. For example, it can be seen that even in the case where the residual intensity of only 2% is obtained by the conventional method, the residual intensity of nearly 10% can be obtained by using the present invention.

As shown in FIG. 18A, when the opening degree of the Kratky block is smaller than a predetermined threshold value, the peak position shifts upward. The reason for shifting is that the parasitic scattering from the preceding block is detected on the higher angle side than the real direct beam position, and the apparent beam position moves to the higher angle side. This occurs in the case of a horizontal reversed arrangement and in the case of a forward arrangement it shifts in the opposite direction. Note that the position of the Kratky block shown in FIG. 18A do not represent an absolute position.

In the present example, the shift of the peak position starts to occur when the Kratky block is arranged at the opening degree where the maximum intensity is 16%. Therefore, it can be seen that when the arrangement of the Kratky block is set to an opening degree less than that, the effect of the parasitic scattering occurs. By using the method of the present invention from the opening degree of the Kratky block where the shift of the peak position starts to occur, the qmin can be expected to be improved.

When the angular resolution required for the measurement data is high, it is necessary to reduce the opening degree of the Kratky block and reduce the measurement intensity. According to FIG. 18B, by using the present invention when the residual intensity is less than 16%, it is possible to achieve the same formal qmin with a larger residual intensity than that by using the conventional approach.

Thus, it can be seen that it is preferable to make the center position of the aperture width of the Kratky block coincide with the center position of the beam when the necessary measurement intensity is large, and that it is preferable to make the center position of the opening of the Kratky block different from the center position of the beam when the necessary measurement intensity is small. That is, if the necessary residual intensity is larger than the predetermined value, the center position of the opening of the Kratky block is preferably made to coincide with the center position of the beam, and if the necessary residual intensity is smaller than the predetermined value, the center position of the opening of the Kratky block is preferably made to set at different position from the center position of the beam. In the above-described example, the residual intensity is set based on the necessary residual intensity, but the residual intensity may be set based on the necessary formal qmin.

In this way, it is preferable to have a function of switching the arrangement of the Kratky block in accordance with the necessary angular resolution and measurement intensity. In the above-described case, the predetermined value is 16%, but the predetermined value is not necessarily 16% because it varies depending on the optical system or beam shape to be used. According to FIG. 18B, it can be seen that, for example, even when the residual intensity of only 5% is obtained by the conventional method, the measurement can be performed with the residual intensity of 11% by using this method.

### (Scanning of Beamstop)

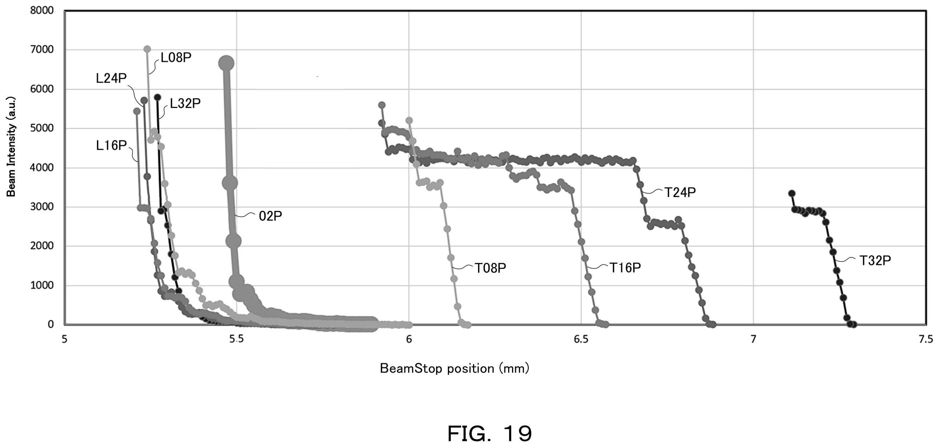

Next, the intensity when the position of the beamstop was moved from the top to the bottom was detected with respect to the direct beam obtained under the arrangement condition of the Kratky block 520 which reaches the output of 2% at each opening degree. FIG. 19 is a graph showing the relationship between the position of the beamstopper and the beam intensity measured at various opening degrees of the Kratky blocks 520.

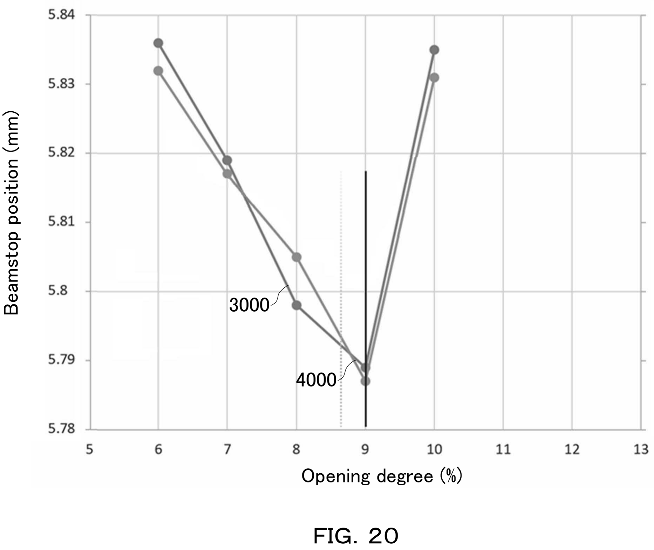

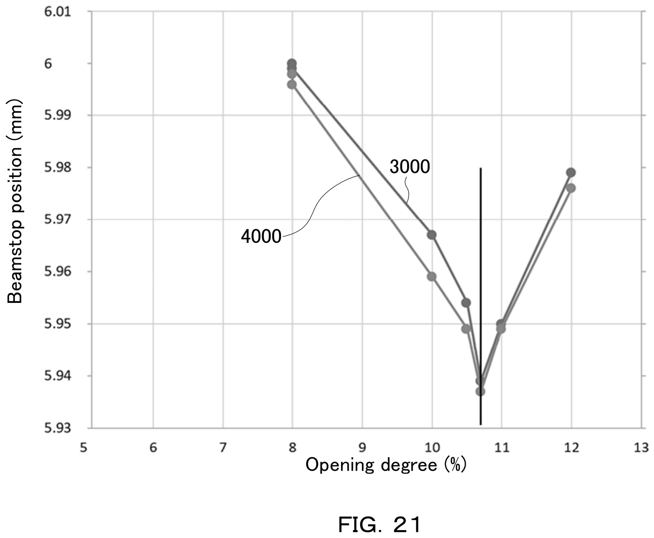

The numerical value of the position indicates the distance to the beam center. In the drawing, "L" and "T" represent the direction of movement of the Kratky block with respect to the direct beam. "L" represents a reversed arrangement, and "T" represents a forward arrangement. "24P" refers to the position of the lower side when the Kratky block is made moved at an opening degree of 24%. Conditions are expressed on the same basis for other symbols. Note that, as described above, "02P" can be obtained only in one position, and therefore the symbols "L" and "T" are not given. When the position of the beamstop is changed from 7.5mm to 5mm, there is a position where the intensity is rapidly increased. At that position, the parasitic scattering or the direct beam is detected, and the position is just before it being the lowest measurable angle position under the respective opening conditions. That is, if the beamstop height is lowest, the measurement can be performed from the lowest angle, and the largest formal qmin is obtained. The results obtained are summarized in FIGS. 20 and 21.

FIG. 20 and FIG. 21 are diagrams showing the relationship between the height of the beamstop and the opening degree when the beam intensity is 3000 or 4000. FIG. 20 shows the measurement result under the condition where the targeted residual intensity is 2%, and FIG. 21 shows the measurement result under the condition where the targeted residual intensity is 5%. From FIG. 20, it can be seen that the condition of the opening degree of 9% is optimal for the targeted residual intensity to be 2%. Further, from FIG. 21, it can be seen that the condition of the opening degree of 10.7% is optimal for the targeted residual intensity to be 5%.

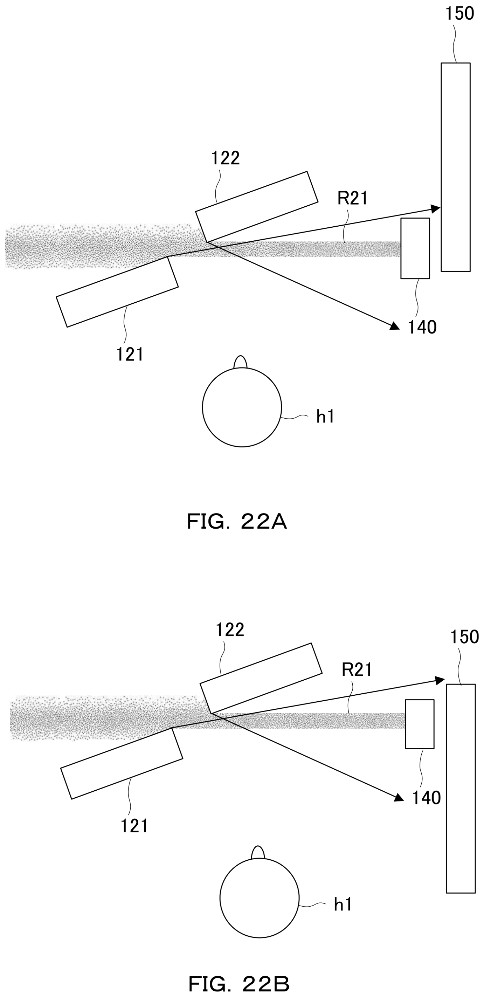

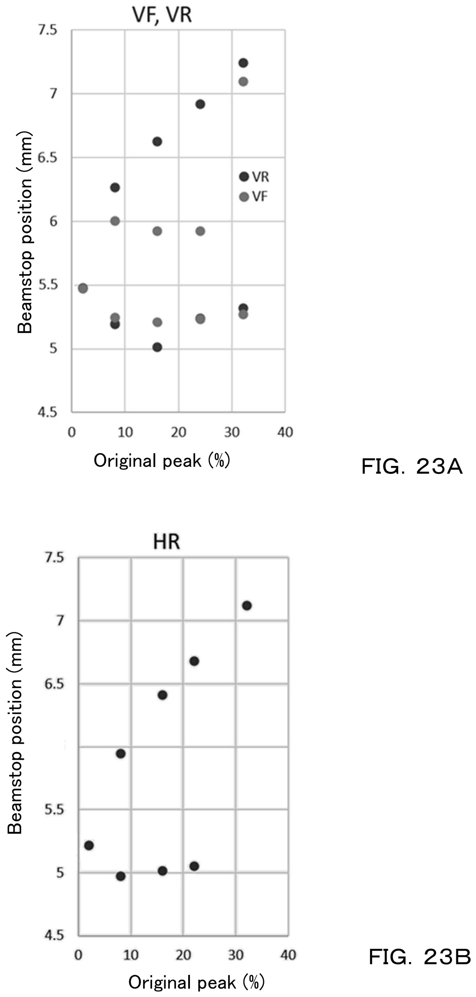

In addition, scannings of the beamstop were performed with the Kratky block 520 in the respective arrangements of the vertical forward arrangement (VF), the vertical reversed arrangement (VR) and the horizontal reversed arrangement (VR). FIGS. 22A and 22B are plan views showing the vertical forward arrangement (VF) and vertical reversed arrangement (VR) of the Kratky blocks 520, respectively. In order to make it easy to understand the plan view viewed from the vertical upper side, picture symbols h1 imitating a human head is added to FIGS. 22A and 22B. The horizontal reversed arranged (HR) is, for example, the arrangement of the Kratky blocks shown in FIG. 1A. FIGS. 23A and 23B are diagrams showing the positional relation between the opening degree of the Kratky block 520 and the beamstop measured under the condition that the output is 2%. In the same opening degree, two positions of the beamstop are described due to the difference between the forward arrangement and the reversed arrangement, and the position of the lower beamstop indicates the reversed arrangement. Since the position of the beamstop is lowest when the opening degree in the horizontal reversed arrangement shown in Fig. 23B is 8%, it was proven that the horizontal reversed arrangement was optimum to obtain the optimum formal qmin.

This application claims priority from Japanese Patent Application No. 2024-216408 filed on Dec. 11, 2024, the entire contents of Japanese Patent Application No. 2024-216408 are incorporated herein by reference.

### Description of Symbols

10 control system
100 X-ray analysis apparatus
110 X-ray generating section
111 X-ray source
115 optical system
120 Kratky block
121 preceding block
122 subsequent block
125 Sample holding tube
130 sample loading mechanism
140 beamstop
150 detector
170 control unit
200 control apparatus
210 computer
211 I/O controlling section
213 intensity setting section
214 arrangement condition setting section
215 arrangement controlling section
216 beamstop controlling section
217 measurement controlling section
219 data acquiring section
223 profile generating section
232 arrangement condition determining section
234 arrangement condition storing section
242 analysis data generating section
L control bus
280 input device
290 output device
320 Kratky block
321 preceding block
322 subsequent block
520 Kratky block
521 preceding upper block
522 subsequent lower block
R01 direct beam
R02, R03 parasitic scattering
R21 direct beam
R22 parasitic scattering
S0 sample

## Claims

1. A control apparatus for controlling an X-ray analysis apparatus for a laboratory and acquiring an X-ray scattering image for morphological analysis of a molecule with the size of the 1000 Å order, the control apparatus comprising:
an arrangement condition setting section for setting an arrangement condition including an opening degree and a height of a Kratky block;
an arrangement controlling section for controlling the Kratky block so as to satisfy the arrangement condition;
a measurement controlling section for irradiating a measurement object with a direct beam of X-rays narrowed down by the controlled Kratky block; and
a data acquiring section for acquiring X-ray data scattered by the measurement object,
wherein the arrangement condition setting section sets a center position of an opening of the Kratky block at a position different from a center position of the direct beam.

2. The control apparatus according to claim 1,
wherein the arrangement condition setting section sets the center position of the direct beam outside a range of the opening of the Kratky block.

3. The control apparatus according to claim 1 or 2,
wherein the data acquiring section acquires X-ray scattering data of biomacromolecules in a solution as the measurement object by using the Kratky block controlled under the arrangement condition.

4. The control apparatus according to any one of claims 1 to 3,
wherein the arrangement condition setting section sets the center position of the opening of the Kratky block to a position different from the center position of the direct beam only when the opening degree of the Kratky block is smaller than a predetermined value.

5. The control apparatus according to any one of claims 1 to 4,
wherein the Kratky block is controlled under the arrangement condition set in measurement for the same type of measurement object as the measurement object and stored, and
the direct beam is irradiated to the measurement object.

6. The control apparatus according to any one of claims 1 to 5, further comprising
an arrangement condition determining section for determining the arrangement condition having the smallest influence of scattering by the Kratky block,
wherein the data acquiring section acquires the detected X-ray intensity data in each of the controlled arrangements, and
the arrangement condition determining section determines the arrangement condition based on the acquired X-ray intensity data.

7. The control apparatus according to claim 6, further comprising
a beamstop controlling section for scanning a beamstop,
wherein the data acquiring section acquires X-ray intensity data with respect to a scan of the beamstop using the Kratky block placed in each of the controlled arrangements, and
the arrangement condition determining section specifies the substantially maximum formal qmin by specifying the position of the beamstop with the shortest distance to the beam center, a target intensity being achieved at the position of the beamstop.

8. The control apparatus according to claim 6,
wherein the data acquiring section acquires X-ray scattering data in the controlled arrangement, and
the arrangement condition determining section determines the arrangement condition which gives the largest value among values of the formal qmin based on the smallest scattering vector in which statistically significant data given on the X-ray scattering profile generated from the acquired X-ray scattering data exists.

9. The control apparatus according to any one of claims 6 to 8, further comprising
an I/O controlling section for receiving an input of a target intensity,
wherein the arrangement condition determining section specifies the arrangement condition that induces the input target intensity.

10. The control apparatus according to any one of claims 6 to 8, further comprising
an intensity setting section for setting a target intensity according to a measurement object,
wherein the arrangement condition determining section specifies the arrangement condition that induces the set targeted intensity.

11. A Kratky block whose arrangement is controlled by the control apparatus according to any one of claims 1 to 5,
wherein the Kratky block has a plate-shaped extra beam blocker provided on the receiving surface opposite to the side for shaping the X-ray direct beam in the subsequent portion.

12. A control method for controlling an X-ray analysis apparatus for a laboratory and acquiring an X-ray scattering image for morphological analysis of a molecule with the size of the 1000 Å order, the control method comprising:
setting an arrangement condition including an opening degree and a height of a Kratky block;
controlling the Kratky block so as to satisfy the arrangement condition;
irradiating a measurement object with a direct beam of X-rays narrowed down by the controlled Kratky block;
acquiring X-ray data scattered by the measurement object; and
setting a center position of an opening of the Kratky block as the arrangement condition at a position different from a center position of the direct beam.

13. A control program for controlling an X-ray analysis apparatus for a laboratory and acquiring an X-ray scattering image for morphological analysis of a molecule with the size of the 1000 Å order, the control program causing a computer to execute:
setting an arrangement condition including an opening degree and a height of a Kratky block;
controlling the Kratky block so as to satisfy the arrangement condition;
irradiating a measurement object with a direct beam of X-rays narrowed down by the controlled Kratky block;
acquiring X-ray data scattered by the measurement object; and
setting a center position of an opening of the Kratky block as the arrangement condition at a position different from a center position of the direct beam.
